# EUROPÄISCHE PATENTSCHRIFT

(11) **EP 3 704 044 B1**
(45) Veröffentlichungstag und Bekanntmachung des Hinweises auf die Patenterteilung: **03.05.2023**
(21) Anmeldenummer: 18788737.7
(22) Anmeldetag: 15.10.2018
(51) Int. Cl.: B65G 47/84

(54) **TRANSPORTRADANORDNUNG ZUM HANDHABEN VON ZYLINDRISCHEN KÖRPERN**
TRANSPORT WHEEL ARRANGEMENT FOR HANDLING CYLINDRICAL BODIES
ARRANGEMENT DE ROUE DE TRANSPORT POUR LA MANUTENTION DE CORPS CYLINDRIQUES

(30) Priorität: 02.11.2017 DE 102017219503
(43) Veröffentlichungstag der Anmeldung: 09.09.2020
(73) Patentinhaber: Bausch + Ströbel SE + Co. KG, 74532 Ilshofen (DE)
(72) Erfinder: HEMER, Michael, 74572 Blaufelden (DE)
(74) Vertreter: Weickmann & Weickmann PartmbB
(86) Internationale Anmeldenummer: PCT/EP2018/078026
(87) Internationale Veröffentlichungsnummer: WO 2019/086233

(56) Entgegenhaltungen:
- EP-A1- 2 604 553
- EP-A1- 3 023 366
- EP-A1- 3 239 078
- EP-A2- 0 355 971
- EP-A2- 0 401 698
- JP-A- H06 183 553

## Beschreibung

Die vorliegende Erfindung betrifft eine Transportradanordnung zum Handhaben von zylindrischen Körpern, insbesondere von Flaschen und/oder Ampullen, umfassend einen Grundkörper, eine Unterdruckquelle, welche dazu vorgesehen ist, einen Unterdruck zum Halten der zylindrischen Körper bereitzustellen, einen scheibenförmigen Radkörper, welcher um seine Mittelachse drehbar an dem Grundkörper gelagert ist, und welcher in seinem Umfangsrand wenigstens eine Durchbrechung aufweist, eine Antriebsvorrichtung, welche dazu eingerichtet ist, den Radkörper in eine Drehbewegung zu versetzen, wenigstens eine Aufnahmebaugruppe zum Halten eines zylindrischen Körpers, umfassend einen Schaft, welcher sich durch die Durchbrechung oder eine der Durchbrechungen in dem Umfangsrand radial nach au-βen erstreckt und welcher eine Leitung zum Führen des Unterdrucks aufnimmt, ein radial außen an dem Schaft vorgesehenes Anlageelement, welches dazu eingerichtet ist, eine Anlagefläche für einen gehaltenen zylindrischen Körper darzustellen, und ein Saugnapfelement, welches mit der Leitung zum Führen des Unterdrucks verbunden und dazu eingerichtet ist, mittels dieses Unterdrucks einen zylindrischen Körper zu halten, und eine Steuereinheit, welche dazu eingerichtet ist, den Betrieb der Antriebsvorrichtung und gegebenenfalls der Unterdruckwelle zu steuern.

Derartige Transportradanordnungen sind in vielerlei Anwendungen im Einsatz, beispielsweise in der chemischen Industrie oder der Pharmaindustrie, wo zylindrische Körper, wie beispielsweise Flaschen, transportiert und gehandhabt werden. Hierbei können derartige Transportradanordnungen entweder als Komponente von übergeordneten Anlagen, wie beispielsweise Abfüllanlagen, wirken, oder auch als Weichen, in denen die zylindrischen Körper verschiedenen Ausgangswegen zugeführt werden können. Insbesondere sind Baugruppen bekannt, in denen wenigstens zwei derartige Transportradanordnungen in Abfolge angeordnet sind und die zylindrischen Körper demnach zunächst von einer der Transportradanordnungen aufgenommen und an einem Übergabepunkt entweder an die zweite Transportradanordnung übergeben oder an einem anderen Punkt von der ersten Transportradanordnung abgegeben werden.

In derartigen Transportradanordnungen werden bekannte Bauelemente verwendet, insbesondere die angesprochenen Unterdruckquellen und Saugnapfelemente, die gemeinsam dazu eingesetzt werden, die zylindrischen Körper zu dem Radkörper hin anzusaugen, so dass sie dann neben der flächigen Anlage an den Saugnapfelementen auch noch an den Anlageelementen zur Anlage kommen. Die aus dem Stand der Technik bekannten Transportradanordnungen umfassen hierzu taschenförmige Anlageelemente, welche jeweils am Umfangsrand des Radkörpers angeordnet sind und hierbei an einen Durchmesser der zu transportierenden zylindrischen Körper angepasst sind.

Diese bekannten Transportradanordnungen sind allerdings nicht dafür geeignet, zylindrische Körper mit unterschiedlichen Durchmessern zu transportieren, oder sie benötigen wenigstens einen aufwändigen manuellen Einstellvorgang, wenn sich die Durchmesser von zu transportierenden zylindrischen Körpern ändern sollen, da hierzu eine Vielzahl von Justierungsschritten vorgenommen werden müssen, insbesondere im Falle von mehreren Aufnahmebaugruppen pro Transportradanordnung, die dann einzeln an den geänderten Durchmesser der zylindrischen Körper angepasst werden müssen. Dies führt dazu, dass bekannte Transportradanordnungen eine erhöhte Standzeit aufweisen, wenn sich der Durchmesser der zu handhabenden zylindrischen Körper ändert, wodurch sowohl die Effizienz als auch die Flexibilität von derartigen Anordnungen leidet.

Dazu offenbart EP0401698A2 eine Transportanordnung nach dem Oberbegriff des Anspruchs 1.

Es ist daher die Aufgabe der vorliegenden Erfindung, eine bekannte Transportradanordnung derart weiterzubilden, dass sie einen sicheren und zuverlässigen Transport von zylindrischen Körpern mit unterschiedlichen Durchmessern erlaubt, wodurch die Flexibilität einer derartigen Anordnung sowie ihre Umschlagsleistung erhöht wird, während in ihrem Transportbetrieb keine Nachteile zu verzeichnen sind.

Die Erfindung ist in dem Anspruch 1 definiert. Die erfindungsgemäße Transportradanordnung umfasst eine Verlagerungseinrichtung, welche dazu eingerichtet ist, das Anlageelement und das Saugnapfelement der Aufnahmebaugruppe oder wenigstens einer der mehreren Aufnahmebaugruppen in koordinierter Weise radial bezüglich des Radkörpers zu verlagern. Indem diese der Transportradanordnung selbst zugeordnete Verlagerungseinrichtung vorgesehen wird, ist eine automatische Einstellung der erfindungsgemäßen Transportradanordnung auch auf zylindrische Körper mit unterschiedlichen Durchmessern in kürzester Zeit oder gar während des Betriebs möglich, so dass diese Anpassung praktisch keinen Stillstand der erfindungsgemäßen Transportradanordnung mehr verlangt. Indem durch die Verlagerungseinrichtung eine koordinierte Verlagerung des wenigstens einen Anlageelements und des wenigstens einen Saugnapfelements stattfindet, kann ferner eine Aufnahme bzw. Übergabe der zylindrischen Körper mit verschiedenen Durchmessern durch die Transportradanordnung an Aufnahme- und Abgabepunkten einer übergeordneten Struktur ebenfalls sichergestellt werden.

In einen Fall, in dem an der erfindungsgemäßen Transportradanordnung mehrere Aufnahmebaugruppen vorgesehen sind, kann die Verlagerungseinrichtung ferner dazu eingerichtet sein, die Anlageelemente und Saugnapfelemente mehrerer, insbesondere sämtlicher Aufnahmebaugruppen, synchron zu verlagern.

In einer bevorzugten Ausführungsform kann das wenigstens eine Anlageelement der erfindungsgemäßen Transportradanordnung ferner zwei Schenkel umfassen, welche sich bezüglich des Schafts nach radial schräg außen von diesem erstrecken. Eine derartige Ausführung des wenigstens einen Anlageelements eignet sich besser für zylindrische Körper von unterschiedlichen Durchmessern, als dies beispielsweise mit Anlageelementen in Form eines Kreisabschnitts der Fall wäre. Derartige nach radial schräg au-βen vorstehende Schenkel bieten nämlich für zylindrische Körper mit Durchmessern, die sich über einen großen Bereich erstrecken können, stets zwei tangentiale Anlagepunkte oder -linien, so dass die auf den zylindrischen Körper durch das Saugnapfelement wirkende Kraft symmetrisch auf den Schaft zu wirkt und zusammen mit dem Saugnapfelement ein sicheres Halten der zylindrischen Körper sichergestellt werden kann.

Hierzu kann es weiterhin vorteilhaft sein, wenn das wenigstens eine Saugnapfelement in radialer Verlängerung des Schafts zwischen den beiden Schenkeln des entsprechenden Anlageelements angeordnet ist. Selbstverständlich sind allerdings auch andere Anordnungen des Saugnapfelements denkbar, beispielsweise kann dieses entlang des zwischen den beiden Schenkeln gebildeten Scheitels verschoben sein.

Um die durch die Verlagerungseinrichtung herbeigeführte Verlagerung des wenigstens einen Anlageelements und des wenigstens einen Saugnapfelements bezüglich des Radkörpers zu führen, kann die wenigstens eine Aufnahmebaugruppe wenigstens einen Nocken umfassen, welcher in einem dem scheibenförmigen Radkörper zugeordneten Langloch geführt ist.

Wenngleich selbstverständlich denkbar ist, die Verlagerungseinrichtung beispielsweise mittels einer Mehrzahl von Stellmotoren auszubilden, die die einzelnen Anlageelemente und Saugnapfelemente einzeln verlagern und mittels einer gemeinsamen Steuerung koordiniert werden, so kann es zur Verringerung des konstruktiven Aufwands vorteilhaft sein, wenn die Verlagerungseinrichtung auf mechanische Stellmittel zurückgreift, um die Anzahl der verwendeten elektronischen Komponenten zu verringern.

Hierbei kann in einer besonders einfachen Ausführungsform der scheibenförmige Radkörper zwei konzentrisch angeordnete Scheibenelemente umfassen, welche bezüglich ihrer gemeinsamen Mittelachse gegeneinander verdrehbar sind, beispielsweise indem die Antriebsvorrichtung jeweilige Antriebe, insbesondere Servomotoren, für beide Scheibenelemente umfasst. Indem in dieser Ausführungsform das Langloch, in dem der wenigstens eine einer Aufnahmebaugruppe zugordnete Nocken aufgenommen ist, über einen vorbestimmten Winkelbereich des Radkörpers spiralförmig verläuft, kann durch die Verdrehung der beiden Scheibenelemente gegeneinander die Verlagerung des Anlageelements und des Saugnapfelements in radialer Richtung bezüglich des Radkörpers hervorgerufen werden.

Da ein unterschiedlicher Durchmesser von verschiedenen zylindrischen Körpern zu einer ebenfalls unterschiedlichen Krümmung der Außenwand des zylindrischen Körpers in dem Bereich führt, in dem der zylindrische Körper an dem Anlageelement anliegt und das Saugnapfelement den zylindrischen Körper hält, ist die Verlagerungseinrichtung zum sicheren Halten des Körpers dazu eingerichtet, das wenigstens eine Anlageelement und das wenigstens eine Saugnapfelement bei einer radialen Verlagerung bezüglich des Radkörpers auch relativ zueinander zu verlagern.

Insbesondere kann in dem oben genannte Fall von zwei radial schräg nach außen vorstehenden Schenkeln und dem damit verbundenen tangentialen Anliegen des zylindrischen Körpers an zwei Punkten oder Linien an diesen Schenkeln bei einer niedrigeren Krümmung der zylindrischen Wand des Körpers ein weiteres Hervortreten des Saugnapfelementes zwischen den beiden Schenkeln wünschenswert sein.

In dem ebenfalls oben bereits genannten Beispiel einer Führung von Nocken in Langlöchern kann die relative radiale Verlagerung des Anlageelements und des Saugnapfelements dadurch erreicht werden, dass dem Anlageelement und dem Saugnapfelement jeweils ein separater Nocken zugeordnet ist, welche Nocken in separaten Langlöchern in einem der beiden Scheibenelementen geführt sind, wobei die Langlöcher derart ausgebildet sind, dass eine Verdrehung der beiden Scheibenelemente gegeneinander eine relative Verlagerung des Anlageelements und des Saugnapfelements in radialer Richtung bewirkt. Im Fall der oben angesprochenen spiralförmig verlaufenden Langlöcher ist somit dafür zu sorgen, dass die Spiralen nicht vollständig parallel zueinander verlaufen, sondern sich in einer Richtung voneinander entfernen, wodurch ein radiales Auseinanderbewegen des Saugnapfelements und des Anlageelements bei einem Laufen der ihnen jeweils zugeordneten Nocken in diesen beiden Langlöchern hervorgerufen wird.

Erfindungsgemäß umfasst der Schaft zwei konzentrisch angeordnete und gegeneinander in axialer Richtung des Radkörpers verschiebbare Schaftelemente, von welchen dementsprechend eines das Anlageelement trägt und das andere das Saugnapfelement trägt. Auf diese Weise kann sichergestellt werden, dass auch bei der beschriebenen relativen Verlagerung in radialer Richtung zwischen dem Saugnapfelement und dem Anlageelement die Stabilität der Aufnahmebaugruppe in Umfangsrichtung des Radkörpers erhalten bleibt.

Um das Abgeben der zylindrischen Körper von der erfindungsgemäßen Transportradanordnung an eine andere Komponente einer übergeordneten Struktur an einem vorbestimmen Übergabepunkt zu erlauben, kann dem Grundkörper wenigstens eine Schaltvorrichtung zugeordnet sein, welche dazu betreibbar ist, bei einem vorbestimmten Relativwinkel zwischen dem Grundkörper und dem Saugnapfelement oder einem der mehreren Saugnapfelemente das Liefern des Unterdrucks zu diesem zu unterbrechen. Hierbei kann die Schaltvorrichtung derart eingerichtet sein, dass das Liefern des Unterdrucks an dem vorbestimmen Relativwinkel zu jedem Zeitpunkt stattfindet, oder auch derart, dass die Schaltvorrichtung das Liefern des Unterdrucks nur wahlweise unterbindet. Als Alternative zu einer derartigen Schaltvorrichtung könnte beispielsweise aber auch daran gedacht werden, das die die zylindrischen Körper an dem Übergabepunkt übernehmende Einrichtung beispielsweise ebenfalls auf Saugnapfelemente zurückgreift, die allerdings mit einem größeren Unterdruck betrieben werden, so dass durch die Druckdifferenz die zylindrischen Körper von der Transportradanordnung abgezogen und von der anderen Komponente weitertransportiert werden.

Da die erfindungsgemäße Transportradanordnung insbesondere in der chemischen Industrie und der Pharmaindustrie zum Einsatz kommen kann, wo die zylindrischen Körper häufig Flaschen mit einem Durchmesser von 4 bis 9 cm sind, kann daran gedacht werden, dass die Verlagerungseinrichtung dazu eingerichtet sein soll, eine radiale Verlagerung des Anlageelements gegenüber dem Radkörper um wenigstens 20 mm, vorzugsweise wenigstens 45 mm zu ermöglichen. Es sei in diesem Zusammenhang auch darauf hingewiesen, dass für einen zylindrischen Körper mit einem um 45 mm erhöhten Durchmesser eine Verlagerung des Anlageelements gegenüber dem Radkörper lediglich um die Hälfte, also um 20 mm notwendig ist, damit die Achse des zylindrischen Körpers an derselben Position bezüglich des Radkörpers verläuft wie bei einem zylindrischen Körper mit um 45 mm kleinerem Durchmesser, wobei diese Achse bei dem Transport bzw. der Übernahme und Übergabe von zylindrischen Körper in der Regel der entscheidende Parameter ist.

Um den Wartungsaufwand der erfindungsgemäßen Transportradanordnung zu verringern und um diese insbesondere für den Einsatz in der Pharmaindustrie den dortigen Ansprüchen gerecht zu machen, kann der wenigstens eine Schaft in abgedichteter Weise aus dem scheibenförmigen Radkörper herausgeführt sein, und es können gegebenenfalls weitere Dichtungselemente vorgesehen sein, so dass der Innenraum des Radkörpers gegenüber der Umgebung abgedichtet ist. Auf diese Weise kann sichergestellt werden, dass beispielsweise im Innenraum des Radkörpers vorgesehenes Schmiermittel hermetisch von den in den zylindrischen Körpern aufgenommenen Substanzen ferngehalten wird.

Um die Flexibilität der erfindungsgemäßen Transportradanordnung hinsichtlich der Formgebung der zu transportierenden zylindrischen Körper weiter zu erhöhen, kann sie ferner eine Höheneinstellungsvorrichtung umfassen, die dazu eingerichtet ist, den Radkörper in Richtung seiner Mittelachse zu verlagern. Hierdurch kann beim Transport von zylindrischen Körpern der Haltepunkt des Saugelements an dem zylindrischen Körper sowie die Anlagepunkte an der Anlagefläche entlang der Achse des zylindrischen Körpers eingestellt werden.

Da, wie bereits angesprochen, eine erfindungsgemäße Transportradanordnung insbesondere als Komponente einer übergeordneten Struktur zum Einsatz kommen kann, betrifft die vorliegende Erfindung gemäß einem weiteren Aspekt eine Schleusenanordnung für zylindrische Körper, insbesondere Flaschen und/oder Ampullen, umfassend wenigstens eine erste und eine zweite erfindungsgemäße Transportradanordnung, welche derart angeordnet sind, dass die zylindrischen Körper an einem Übergabepunkt von der ersten Transportradanordnung auf die zweite Transportradanordnung übergebbar sind, wenigstens eine Eingabevorrichtung, welche dazu vorgesehen ist, die zylindrischen Körper an einem Eingabepunkt an die erste Transportradanordnung zu übergeben, wenigstens eine erste und eine zweite Ausgabevorrichtung, die jeweils dazu eingerichtet sind, die zylindrischen Körper an einem Ausgabepunkt von der ersten oder zweiten Transportradanordnung zu übernehmen und abzutransportieren, wobei die Steuereinheiten der ersten und zweiten Transportradanordnungen miteinander betriebsmäßig gekoppelt oder durch eine einzelne gemeinsame Steuereinheit gebildet sind, und wobei die Schleusenanordnung wahlweise derart betreibbar ist, dass die zylindrischen Körper von der ersten oder der zweiten Ausgabevorrichtung übernommen werden.

Weitere Merkmale und Vorteile der vorliegenden Erfindung werden aus der nachfolgenden Beschreibung eines Ausführungsbeispiels deutlich, wenn diese zusammen mit den beiliegenden Figuren betrachtet wird. Diese zeigen im Einzelnen:
Figur 1 eine erfindungsgemäße Schleusenanordnung für zylindrische Körper in einer Draufsicht;
Figur 2 eine seitliche Schrägansicht der beiden Transportradanordnungen aus Figur 1;
Figur 3 eine Querschnittsansicht einer der Transportradanordnungen aus den Figuren 1 und 2;
Figur 4 eine vergrößerte Darstellung eines Ausschnitts aus Figur 3;
Figur 5 eine Detailansicht des Grundkörpers einer der Transportradanordnungen aus den Figuren 1 und 2 in schräger Draufsicht; und
Figuren 6a bis 6c drei Ansichten einer der Transportradanordnungen aus den Figuren 1 und 2 in jeweils teilweise demontiertem Zustand.

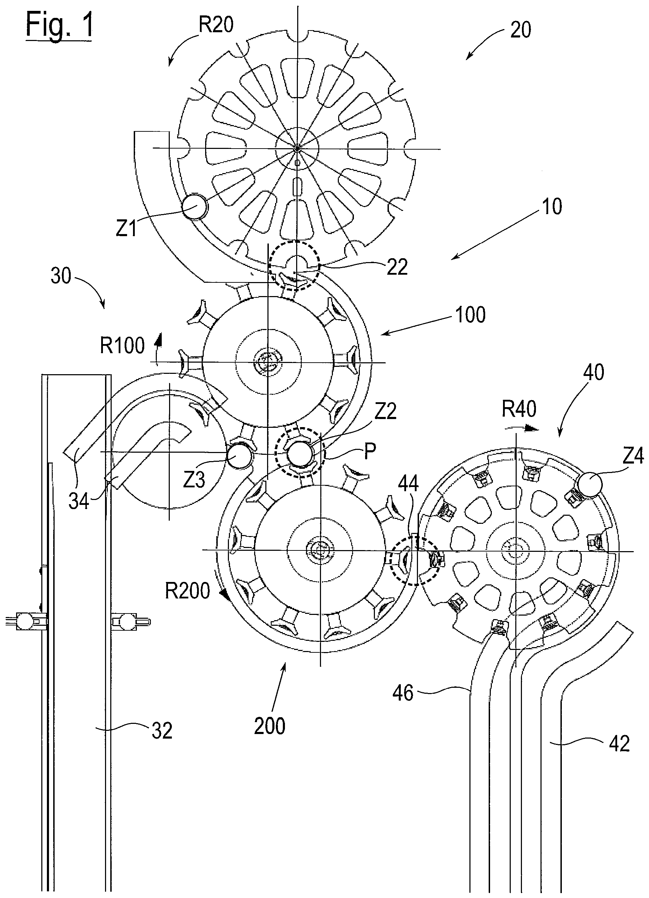

Figur 1 zeigt eine ganz allgemein mit dem Bezugszeichen 10 bezeichnete erfindungsgemäße Schleusenanordnung für zylindrische Körper, insbesondere für Flaschen und/oder Ampullen. Die Schleusenanordnung 10 umfasst eine als Transportrad ausgebildete Eingabevorrichtung 20, die dazu vorgesehen ist, die zylindrischen Körper an einem Eingabepunkt 22 an eine erste erfindungsgemäße Transportradanordnung 100 zu übergeben, sowie eine erste Ausgabevorrichtung 30, eine zweite Ausgabevorrichtung 40 und eine zweite erfindungsgemäße Transportradanordnung 200.

Die Schleusenanordnung 10 ist dazu vorgesehen, zylindrische Körper wahlweise an die erste Ausgabevorrichtung 30 oder die zweite Ausgabevorrichtung 40 zu übergeben, von welchen aus sie dann über jeweilige erste und zweite Transportvorrichtungen 32 und 42 weiter transportiert und entsprechend weiteren Komponenten eines übergeordneten Systems zugeführt werden können. Die erste und die zweite Ausgabevorrichtung 30 und 40 sind unterschiedlich aufgebaut, die erste Ausgabevorrichtung umfasst nämlich lediglich eine zweiteilige Leitführung 34, an welchem von der ersten Transportradanordnung 100 geführte zylindrische Körper abgestreift werden und durch den Druck nachfolgender zylindrischer Körper bis zu der ersten Transportvorrichtung 32 weitergeschoben werden, von welcher sie dann, wie angesprochen, abtransportiert werden.

Im Gegensatz hierzu umfasst die zweite Ausgabevorrichtung 40 ebenfalls ein Transportrad, dessen Drehachse mit denjenigen der Eingabevorrichtung 20 und den beiden Transportradanordnungen 100 und 200 parallel ist. Die zweite Ausgabevorrichtung 40 übernimmt an einem Übergabepunkt 44 von der zweiten Transportradanordnung 200 die zylindrischen Körper, die nach einer weiteren Drehung der zweiten Ausgabevorrichtung 40 dann ebenfalls an einer Leitführung 46, die einen Teil der zweiten Transportvorrichtung 42 bildet, abgestreift und weitertransportiert werden.

Die Drehrichtungen der Transporträder 20, 40, 100 und 200 im Betrieb der Schleusenanordnung 10 sind in Figur 1 jeweils durch Pfeile R20, R40, R100 und R200 angedeutet.

Die Entscheidung, ob ein über die Eingabevorrichtung 20 in die Schleusenanordnung 10 eingegebener zylindrischer Körper letztlich von der ersten Transportvorrichtung 32 oder der zweiten Transportvorrichtung 42 abtransportiert wird, wird am Übergabepunkt P zwischen der ersten Transportradanordnung 100 und der zweiten Transportradanordnung 200 getroffen. In dem Fall, in dem eine Übergabe des zylindrischen Körpers von der ersten Transportradanordnung 100 auf die zweite Transportradanordnung 200 stattfindet, wird der zylindrische Körper letztlich durch die zweite Transportvorrichtung 42 aus der Schleusenanordnung 10 ausgeschleust, während, wenn an dem Punkt P auf eine Übergabe des zylindrischen Körpers von der ersten Transportradanordnung 100 zu der zweiten Transportradanordnung 200 verzichtet wird, der zylindrische Körper schließlich durch die zweite Transportvorrichtung 32 aus der Schleusenanordnung 10 ausgeschleust wird.

Es ist in der Draufsicht aus der Figur 1 ersichtlich, dass insbesondere in den Übergabepunkten 22, 44 und P die die zylindrischen Körper tragenden Elemente, die weiter unten für die erste und zweite Transportanordnung noch detailliert beschrieben werden, in einer relativen Position zueinander ausgerichtet sein müssen, die den Außendurchmessern der zylindrischen Körper entspricht. Sollte dieser relative Abstand zu groß sein, so könnte eine problemlose Übergabe des zylindrischen Körpers nicht sichergestellt werden, und in einem Fall, in dem die Elemente zu nah beieinander wären, könnten die zylindrischen Körper in den Übergabepunkten beschädigt werden.

Es ist ebenfalls ersichtlich, dass die Rotationsgeschwindigkeiten der rotierenden Elemente 20, 40, 100 und 200 aufeinander abgestimmt sein müssen, damit die den zylindrischen Körper tragende Elemente paarweise jeweils gleichzeitig an den Übergabepunkten 22, 44 und P vorliegen, da auch dies eine wesentliche Voraussetzung für eine problemlose Übergabe der zylindrischen Körper ist.

Es sei ferner darauf hingewiesen, dass in Figur 1 mehrere der genannten zylindrischen Körper gezeigt sind, die sich momentan an verschiedenen Positionen in der Schleusenanordnung 10 befinden, und die mit den Bezugszeichen Z1 bis Z4 bezeichnet sind. Hierbei ist der zylindrische Körper Z1 momentan von der Übergabevorrichtung 20 getragen und wird demnächst von dieser an die erste Transportradanordnung 100 übergeben werden. Der zweite zylindrische Körper Z2 befindet sich momentan im Übergabepunkt P und wird soeben von der ersten Transportradanordnung 100 an die zweite Transportradanordnung 200 übergeben. Dem hingegen ist der dritte zylindrische Körper Z3 nicht an die zweite Transportradanordnung 200 übergeben worden, sondern ist bei der ersten Transportradanordnung 100 verblieben, d. h. er hat den Punkt P durchlaufen, ohne von der ersten Transportradanordnung 100 abgegeben worden zu sein, so dass er demnächst an die erste Ausgabevorrichtung 30 übergeben und schließlich von der ersten Transportvorrichtung 32 aus der Schleusenanordnung 10 ausgeschleust werden wird. Der vierte zylindrische Körper Z4 ist wiederum von der zweiten Transportradanordnung 200 im Übergabepunkt P übernommen worden und anschließend an die zweite Ausgabevorrichtung 40 im Übergabepunkt 44 übergeben worden, so dass er sich nun auf der zweiten Ausgabevorrichtung 40 befindet und schließlich von der zweiten Transportvorrichtung 42 aus der Schleusenanordnung 10 ausgeschleust werden wird.

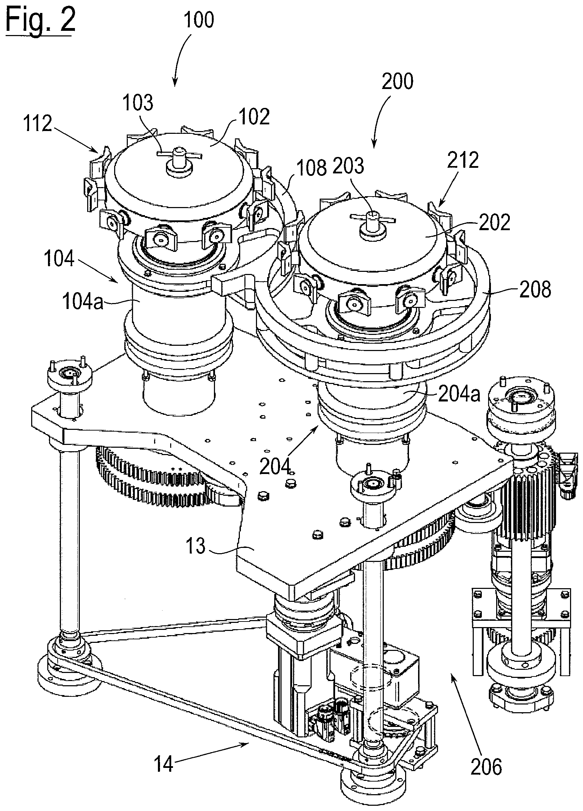

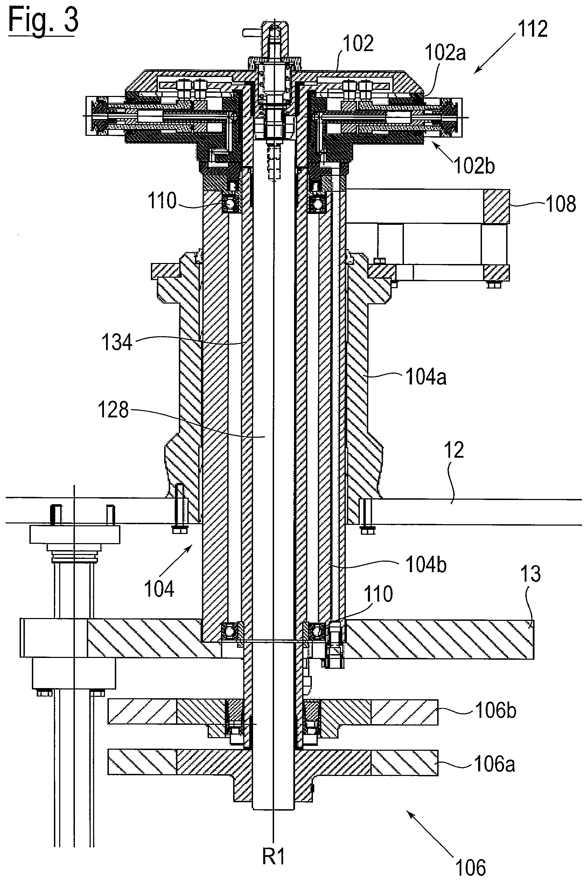

Figur 2 zeigt nun die erste und zweite Transportradanordnung 100 und 200 in schräger Draufsicht. Diese Transportradanordnungen 100 und 200 umfassen jeweilige mehrteilige scheibenförmige Radkörper 102 und 202, deren genauer Aufbau sich aus den folgenden Figuren ergeben wird, und die mittels Flügelmuttern 103 und 203 zusammengehalten sind. Die Radkörper 102 und 202 sind ferner jeweils drehbar gegenüber jeweiligen Grundkörpern 104 und 204 angeordnet, von denen jeweilige erste oder äußere Teile 104a und 204a in Figur 2 sichtbar sind. Die beiden äußeren Teile 104a und 204a der Grundkörper 104 und 204 sind auf einer lediglich in Figur 3 gezeigten ersten gemeinsamen Basisplatte 12 befestigt. Innerhalb der äußeren Teile 104a und 204a umfassen die Grundkörper 104 und 204 verlagerbare innere oder zweite Teile (im Fall des inneren Teils 104b der ersten Transportradanordnung 100 ebenfalls lediglich in Figur 3 sichtbar), die wiederum mit einer zweiten gemeinsamen Basisplatte 13 verbunden sind, die mittels einer Höheneinstellungsvorrichtung 14 höhenverstellbar ist. Auf diese Weise kann nicht nur die im Folgenden beschriebene Anpassung der jeweiligen Transportradanordnung 100 und 200 an den Außendurchmesser der zu handhabenden zylindrischen Körper durchgeführt werden, sondern auch eine Anpassung an die Höhe bzw. den geeignetsten Aufnahmepunkt der zylindrischen Körper.

Weiterhin ist in Figur 2 eine Antriebsvorrichtung 206 gezeigt, die die Rotationsbewegung des scheibenförmigen Radkörpers 202 der zweiten Transportradanordnung 200 bewirken kann. Wenngleich aus perspektivischen Gründen nicht in Figur 2 gezeigt, so ist doch auch der ersten Transportradanordnung 100 eine entsprechende Antriebsvorrichtung 106 zugeordnet, die beispielsweise in Figur 3 teilweise dargestellt ist. Die einzelnen Antriebsvorrichtungen 106 und 206 müssen, wie bereits angesprochen, in koordinierter Weise betrieben werden, so dass die Übergaben von zylindrischen Körpern an den oben beschriebenen Übergabepunkte fehlerfrei ablaufen können. Hierzu können die Antriebsvorrichtungen 106 und 206 der ersten und zweiten Transportradanordnung 100 und 200 durch eine gemeinsame, nicht gezeigte Steuereinheit angesteuert werden, oder es können der ersten und der zweiten Transportradanordnung 100 und 200 jeweilige Steuereinheiten zugeordnet sein, die sich allerdings in einem Datenaustausch zu ihrer Synchronisierung befinden.

Zudem zeigt die Figur 2 noch Führungselemente 108 und 208, die an den jeweiligen äußeren Teilen 104a und 204a der Grundkörper 104 und 204 der ersten und zweiten Transportradanordnung 100 und 200 befestigt sind und als Auflagen für die zylindrischen Körper wirken, so dass die von den Transportradanordnungen 100 und 200 getragenen Körper auf ihnen aufstehen können, während sie die vorgesehenen Kreisbahnen durchlaufen.

In Figur 3 ist nun beispielhaft die erste Transportradanordnung 100 in einem Querschnitt gezeigt, der durch ihre Rotationsachse verläuft, die in der gezeigten Ansicht aus Figur 3 mit R1 bezeichnet ist. Weiterhin sind in Figur 3 einige Komponenten zu erkennen, die bereits in Zusammenhang mit Figur 2 beschrieben worden sind, wie beispielsweise die erste Basisplatte 12 und der Grundkörper 104. Es ist hierbei nun zu erkennen, dass der Grundkörper 104 zweiteilig ausgebildet ist und innerhalb seines an der ersten Basisplatte 12 gehalterten äußeren Teils 104a noch den fest mit der zweiten Basisplatte 13 verbundenen zweiten Teil 104b umfasst, der den Radkörper 102 trägt.

Außerdem zeigt Figur 3 noch zu der Antriebsvorrichtung 106 zugehörige Komponenten, die den Radkörper 102 in Drehung versetzen können, nämlich ein erstes Zahnrad 106a und ein zweites Zahnrad 106b, auf deren Funktion weiter unten noch eingegangen werden wird. Es sind des Weiteren mehrere Paare von Lagern 110 vorgesehen, die die Rotation des Radkörpers 102 gegenüber dem zweiten Teil 104b des Grundkörpers 104 ermöglichen, wobei die Rotation um die Rotationsachse R1 verläuft und von der Antriebsvorrichtung 106 angetrieben wird. Hierbei ist das erste Zahnrad 106a mit einer ersten Welle 128 verbunden, die innerhalb einer zweiten Welle 134 aufgenommen ist, die wiederum mit dem zweiten Zahnrad 106b verbunden ist.

Der scheibenförmige Radkörper 102 umfasst in seinem Umfangsrand 102a eine Mehrzahl von Durchbrechungen 102b, durch die hindurch sich jeweilige Aufnahmebaugruppen 112 radial nach außen erstrecken. Diese Aufnahmebaugruppen 112 sind, ebenso wie die entsprechenden Aufnahmebaugruppen 212 der zweiten Transportradanordnung 200, auch bereits in Figur 2 gezeigt. Dort ist ebenfalls zu erkennen, dass den beiden Transportradanordnungen 100 und 200 jeweils zehn Aufnahmebaugruppen 112 bzw. 212 zugeordnet sind, die in gleichmäßigen Winkelabständen um die Radkörper 102 und 202 herum verteilt und identisch aufgebaut sind, so dass sich die nachfolgende Beschreibung einer einzelnen Aufnahmebaugruppe 112 vollständig auf sämtliche der Aufnahmebaugruppen 112 und 212 der beiden Transportradanordnungen 100 und 200 übertragen lässt.

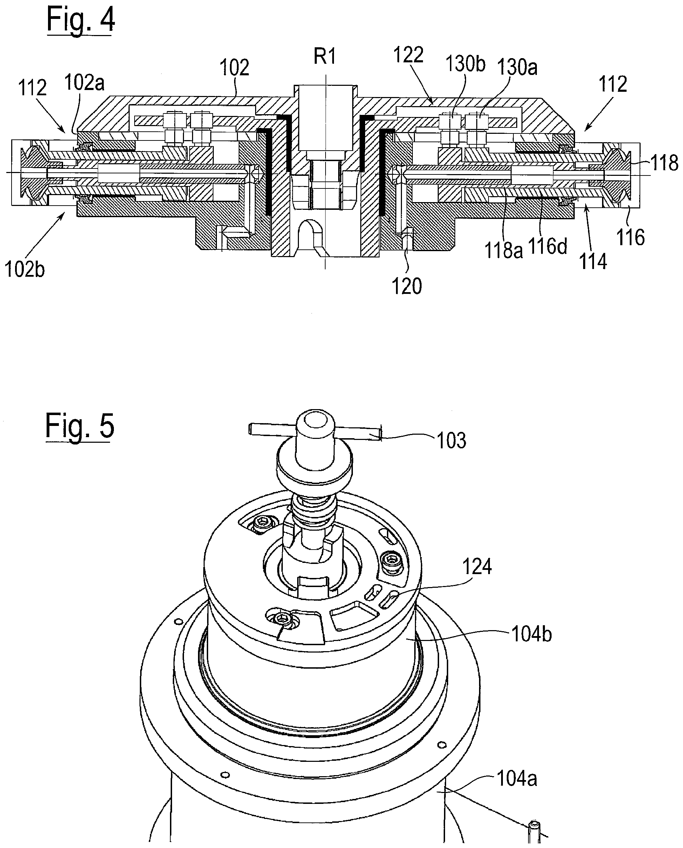

Zum Verständnis der Funktion der Transportradanordnung 100 sei nun auf die Figur 4 hingewiesen, in der der scheibenförmige Radkörper 102 zusammen mit zwei sich radial gegenüberliegenden Aufnahmebaugruppen 112 und weiteren Komponenten in einer vergrößerten Darstellung erneut gezeigt ist.

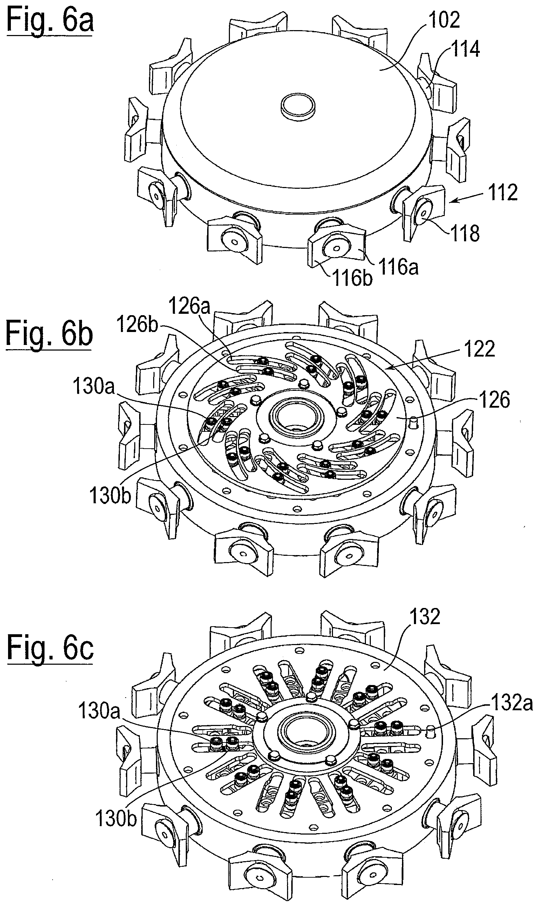

Jede Aufnahmebaugruppe 112 umfasst einen zylindrischen Schaft 114, der sich durch die bereits angesprochene Durchbrechung 102b im Umfangsrand 102a in dem scheibenförmigen Radkörper 102 radial nach außen erstreckt. Am radial äußeren Ende des Schafts 114 ist ein Anlageelement 116 vorgesehen, das zwei sich bezüglich des Schafts nach radial schräg außen erstreckende Schenkel 116a und 116b umfasst (siehe Figuren 6a bis 6c). Dieses Anlageelement 116 mit seinen Schenkeln 116a und 116b ist auch bereits in der Draufsicht aus Figur 1 zu erkennen, anhand welcher nachvollzogen werden kann, dass die Schenkel 116a und 116b jeweilige Anlageflächen für die von der entsprechenden Aufnahmebaugruppe getragenen zylindrischen Körper bilden, beispielsweise die in der Figur 1 gezeigten zylindrischen Körper Z2 und Z3.

Zwischen den beiden Schenkeln 116a und 116b ist ferner ein radial nach außen weisendes Saugnapfelement 118 vorgesehen, das über eine Leitung 120 mit einem von einer nicht gezeigten Unterdruckquelle erzeugten Unterdruck versorgt wird, wobei die Leitung 120 zunächst von unten her parallel zu der Rotationsachse R1 verläuft und anschließend in radiale Richtung abknickt, um durch den Innenraum des Schafts 114 zu dem Saugnapfelement 118 zu verlaufen. Das genannte Saugnapfelement 118 ist aus einem elastischen Material, wie beispielsweise einem geeigneten Gummimaterial, gebildet und dazu eingerichtet, sich durch den über die Leitung 120 zugeführten Unterdruck an die zylindrische Außenkontur der zylindrischen Körper anzupassen und diese durch Wirkung des Unterdrucks zu halten.

Um die erfindungsgemäß vorgesehene Verlagerbarkeit des Anlageelements 116 und des Saugnapfelements 118 gegenüber dem Radkörper 102 in axialer Richtung zu ermöglichen, ist ferner eine Verlagerungseinrichtung 122 vorgesehen, die weiter unten anhand der Figuren 6a bis 6c näher erläutert werden wird. In dem gezeigten Ausführungsbeispiel ist die Verlagerungseinrichtung 122 in der Lage, das Anlageelement 116 und das Saugnapfelement 118 in koordinierter Weise derart radial bezüglich des Radkörpers zu verlagern, dass auch eine Relativbewegung zwischen dem Anlageelement 116 und dem Saugnapfelement 118 auftritt.

Zunächst sei jedoch unter Bezugnahme auf Figur 5, die in schräger Draufsicht Abschnitt der beiden Teile 104a und 104b des Grundkörpers 104 zeigt, der Übergabeprozess erläutert, der in den Übergabepunkten 22, 44 und P aus der Figur 1 stattfindet.

Wie bereits mehrfach erwähnt, sind die Teile 104a und 104b des Grundkörpers 104 bezüglich den Basisplatten 12 und 13 fest angeordnet, so dass diese stets in einer festen räumlich Orientierung verbleiben, während sich der scheibenförmige Radkörper 102, der in Figur 5 aus Gründen der Übersichtlichkeit nicht dargestellt ist, gegenüber diesem Grundkörper 104 um eine Rotationsachse dreht. Um nun in vorbestimmten Winkelpositionen der Aufnahmebaugruppen 112 gegenüber dem Grundkörper 104 eine Übergabe des von der genannten Aufnahmebaugruppe 112 getragenen zylindrischen Körpers zu ermöglichen, also beispielsweise an den genannten Übergabepunkten 22, 44 und P, ist dem Grundkörper 104 in der Darstellung aus Figur 5 eine Schaltvorrichtung 124 zugeordnet, die, wenn sie von der Aufnahmebaugruppe 112 durch die Rotation des Radkörpers 102 überstrichen wird, selektiv das Liefern des Unterdrucks durch die Leitung 120 zu dem Saugnapfelement 118 unterbrechen kann.

Hierbei ist die in Figur 5 gezeigte Schaltvorrichtung 124 lediglich ein Ausführungsbeispiel, es können nämlich je nach Anwendungsfall an dem entsprechenden Übergabepunkt entweder fest eingestellte Schaltvorrichtungen vorgesehen sein, die das Liefern des Unterdrucks an der jeweiligen Position stets unterdrücken, oder Schaltvorrichtungen, deren Funktionalität ein- und ausgeschaltet werden kann, so dass ein Abtrennen des momentan getragenen zylindrischen Körpers entweder ermöglicht wird oder nicht.

Erneut unter Bezugnahme auf Figur 1 kann demnach beispielsweise die zweite Transportradanordnung 200 eine fest eingestellte Schaltvorrichtung umfassen, die dem Übergabepunkt 44 zugeordnet ist, da an diesem Punkt offensichtlich jeder zylindrische Körper an die zweite Ausgabevorrichtung 40 übergeben werden soll und kein zylindrischer Körper an der zweiten Transportradanordnung 200 verbleiben soll.

Im Gegensatz hierzu kann die erste Transportradanordnung 100 in Figur 1 eine variable Schaltvorrichtung umfassen, die es ermöglicht, im Übergabepunkt P das Liefern des Unterdrucks an eine diesen Punkt P erreichende Aufnahmebaugruppe selektiv zu unterbrechen, um an diesem Punkt P eine Übergabe eines zylindrischen Körpers an die zweite Transportradanordnung 200 selektiv zuzulassen oder auszuschließen. Somit kann der Schleuseneffekt der Schleusenanordnung 10 aus Figur 1 über eine einzelne Schaltvorrichtung gesteuert werden, die der ersten Transportradanordnung 100 zugeordnet ist. Alternativ wären jedoch auch andere Mechanismen für das selektive Ausschleusen der zylindrischen Körper denkbar, beispielsweise könnte die zweite Transportradanordnung 200 mit einem betragsmäßig höheren Unterdruck arbeiten, der dann selektiv im Bereich des Übergabepunkts P ein- und ausgeschaltet wird, wobei somit die zweite Transportradanordnung 200 die zylindrischen Körper an diesem Punkt P selektiv zwangsweise übernehmen kann.

Zuletzt sei unter Bezugnahme auf die Figuren 6a bis 6c die Funktion der Verlagerungseinrichtung 122 erläutert, mittels derer in der gezeigten Ausführungsform einer Transportradanordnung 100 die Anlageelemente 116 und Saugnapfelemente 118 in koordinierter Weise einerseits bezüglich des scheibenförmigen Radkörpers 102 radial nach außen verlagert werden können und während dieser Verlagerung ferner auch relativ zueinander verlagert werden.

Hierzu ist zunächst in Figur 6a erneut der Radkörper 102 der ersten Transportradanordnung 100 in einer Ansicht gezeigt, die im Wesentlichen derjenigen aus Figur 2 entspricht. Hierbei wurde lediglich auf die Darstellung der Flügelmutter 103 verzichtet, so dass in Figur 6a lediglich die Oberseite des Radkörper 102 sowie die zehn Aufnahmebaugruppen 112 jeweils mit ihren Anlageelementen 116, die jeweils Flügel 116a und 116b umfassen, Saugnapfelementen 118 und den aus dem Radkörper 102 herausragenden Abschnitten ihrer Schäfte 114 gezeigt sind.

In Figur 6b ist nun die obere Abdeckung des scheibenförmigen Radkörpers 102 entfernt worden, so dass der Blick frei ist auf die Verlagerungseinrichtung 122 und hierbei insbesondere auf deren erste Scheibe 126. Diese erste Scheibe 126 ist, wie aus der Figur 3 zu entnehmen, über die bereits angesprochene Welle 134 mit dem zweiten Zahnrad 106b der Antriebsvorrichtung 106 verbunden, so dass sie durch eine Rotation dieses Zahnrads 106b in Rotation versetzt wird. Ferner sind in der ersten Scheibe 126 Paare von spiralförmig entgegen dem Uhrzeigersinn von innen nach außen verlaufenden Langlöchern 126a und 126b vorgesehen, in denen jeweilige Nocken 130a und 130b geführt sind. Diese Nocken 130a und 130b sind, wie am besten in Figur 4 zu erkennen ist, mit dem Anlageelement 116 bzw. dem Saugnapfelement 118 mittels das Anlageelement 116 bzw. das Saugnapfelement 118 tragender Wellen 116d bzw. 118a verbunden. Diese Wellen 116d und 118a sind gleitbar gegeneinander angeordnet, so dass eine Verlagerung der Anlageelement 116 gegenüber dem Saugnapfelement 118 ermöglicht wird, und sie bilden jeweils einen Teil des Schafts 114.

Erneut unter Bezugnahme auf Figur 6b ist zu erkennen, dass die Paare von Langlöchern 126a und 126b nicht vollständig parallel zueinander verlaufen, sondern sich in Richtung radial nach außen leicht voneinander entfernen. Demnach werden sich, wenn die Nocken 130a und 130b in den Langlöchern 126a und 126b nach radial außen geführt werden, die Wellen 116d und 118a ebenfalls leicht voneinander entfernen, wodurch sich schlussendlich eine relative Verlagerung der Anlageelemente 116 gegenüber den Saugnapfelementen 118 einstellen wird, die gleichzeitig mit der radialen Verlagerung der Anlageelemente 116 und der Saugnapfelemente 118 gegenüber dem Radkörper 102 stattfinden wird.

Schließlich ist in Figur 6c zur Veranschaulichung auch noch die erste Scheibe 126 der Verlagerungseinrichtung 122 entfernt worden, so dass der Blick frei ist auf die zweite Scheibe 132 der Verlagerungseinrichtung 122. Diese zweite Scheibe 132 ist fest mit dem Radkörper 102 verbunden und daher durch eine Drehbewegung des zweiten Zahnrads 106a der Antriebseinrichtung 106 ebenfalls in eine Rotationsbewegung versetzbar. Die zweite Scheibe 132 weist ferner in radialer Richtung orientierte Langlöcher 132a auf, in denen ebenfalls die bereits angesprochenen Nocken 130a und 130b der Anlageelemente 116 bzw. Saugnapfelemente 118 geführt sind.

Die Funktionsweise der Verlagerungseinrichtung 122 lässt sich nun in einer Zusammenschau der Figuren 6b und 6c verstehen, wenn davon ausgegangen wird, dass die beiden Scheiben 126 und 132 gegeneinander verdrehbar sind. Dies wird dadurch erreicht, dass getrennte Schrittmotoren jeweils die Zahnräder 106a und 106b der Antriebseinrichtung 106 antreiben, wobei diese beiden Schrittmotoren in koordinierter Weise gesteuert werden. In einem normalen Betrieb laufen die beiden Motoren völlig synchron, so dass keine relative Verlagerung zwischen der ersten Scheibe 126 und der zweiten Scheibe 132 in Winkelrichtung auftreten wird. Sollen nun allerdings die Anlageelemente 116 und die Saugnapfelemente 118 radial bezüglich des Radkörpers 102 verschoben werden, um für den Einsatz mit zylindrischen Körpern eines anderen Durchmessers vorbereitet zu werden, so werden die Schrittmotoren, die die Zahnräder 106a und 106b antreiben, kurzzeitig asynchron betrieben, so dass eine relative Drehung zwischen den beiden Scheiben 126 und 132 auftreten wird. Hierdurch verlagern sich die in den beiden Langlöchern 132a und 126a bzw. 126b geführten Nocken 130a und 130b radial nach außen oder innen, wobei die oben bereits angesprochene leichte Verlagerung zwischen den Nocken 130a und 130b und damit dem Anlageelement 116 und dem Saugnapfelement 118 durch die leicht unterschiedliche Krümmung der beiden Langlöcher 130a und 130b erzielt wird.

Auf diese Weise kann für zylindrische Körper mit einem durch die Geometrie der Langlöcher 126a und 126b sowie den Durchmesser des Radkörper 102 und damit der maximal möglichen Verlagerung der Anlageelemente 116 und der Saugnapfelemente 118 festgelegten Bereich von Durchmessern eine optimale Anlage und eine optimale Halterung durch die Saugnapfelemente 118 erreicht werden.

## Patentansprüche

1. Transportradanordnung zum Handhaben von zylindrischen Körpern (Z1-Z4), insbesondere von Flaschen und/oder Ampullen, umfassend:
- einen Grundkörper (104);
- eine Unterdruckquelle, welche dazu vorgesehen ist, einen Unterdruck zum Halten der zylindrischen Körper (Z1-Z4) bereitzustellen;
- einen scheibenförmigen Radkörper (102), welcher um seine Mittelachse (R1) drehbar an dem Grundkörper (104) gelagert ist, und welcher in seinem Umfangsrand (102a) wenigstens eine Durchbrechung (102b) aufweist;
- eine Antriebsvorrichtung (106), welche dazu eingerichtet ist, den Radkörper (102) in eine Drehbewegung zu versetzen;
- wenigstens eine Aufnahmebaugruppe (112) zum Halten eines zylindrischen Körpers (Z1-Z4), umfassend:
o einen Schaft (114), welcher sich durch die Durchbrechung (102b) oder eine der Durchbrechungen (102b) in dem Umfangsrand (102a) radial nach außen erstreckt und welcher eine Leitung (120) zum Führen des Unterdrucks aufnimmt;
o ein radial außen an dem Schaft (114) vorgesehenes Anlageelement (116), welches dazu eingerichtet ist, eine Anlagefläche für einen gehaltenen zylindrischen Körper (Z1-Z4) darzustellen; und
∘ ein Saugnapfelement (118), welches mit der Leitung (120) zum Führen des Unterdrucks verbunden und dazu eingerichtet ist, mittels dieses Unterdrucks einen zylindrischen Körper (Z1-Z4) zu halten; und
- eine Steuereinheit, welche dazu eingerichtet ist, den Betrieb der Antriebsvorrichtung (106) und gegebenenfalls der Unterdruckquelle zu steuern;
wobei die Transportradanordnung ferner eine Verlagerungseinrichtung (122) umfasst, welche dazu eingerichtet ist, das Anlageelement (116) und das Saugnapfelement (118) der Aufnahmebaugruppe (112) oder wenigstens einer der mehreren Aufnahmebaugruppen (112) in koordinierter Weise radial bezüglich des Radkörpers (102) zu verlagern, **dadurch gekennzeichnet, dass** die Verlagerungseinrichtung (122) dazu eingerichtet ist, das wenigstens eine Anlageelement (116) und das wenigstens eine Saugnapfelement (118) bei einer radialen Verlagerung bezüglich des Radkörpers (102) auch relativ zueinander zu verlagern, und dass der Schaft (114) zwei konzentrisch angeordnete und gegeneinander in axialer Richtung des Radkörpers (102) verschiebbare Schaftelemente (116d, 118a) umfasst, von welchen eines (116d) das Anlageelement (116) trägt und das andere (118a) das Saugnapfelement (118) trägt.

2. Transportradanordnung nach Anspruch 1, **dadurch gekennzeichnet, dass** mehrere Aufnahmebaugruppen (112) vorgesehen sind und die Verlagerungseinrichtung (122) dazu eingerichtet ist, die Anlageelemente (116) und Saugnapfelemente (118) mehrerer, insbesondere sämtlicher, Aufnahmebaugruppen (112) synchron zu verlagern.

3. Transportradanordnung nach einem der vorhergehenden Ansprüche, **dadurch gekennzeichnet, dass** das wenigstens eine Anlageelement (116) zwei Schenkel (116a, 116b) umfasst, welche sich bezüglich des Schafts (114) nach radial schräg außen von diesem erstrecken.

4. Transportradanordnung nach Anspruch 3, **dadurch gekennzeichnet, dass** das Saugnapfelement (118) in radialer Verlängerung des Schafts (114) zwischen den beiden Schenkeln (116a, 116b) des Anlageelements (116) angeordnet ist.

5. Transportradanordnung nach einem der vorhergehenden Ansprüche, **dadurch gekennzeichnet, dass** die wenigstens eine Aufnahmebaugruppe (112) wenigstens einen Nocken (130a, 130b) umfasst, welcher in einer dem Radkörper zugeordneten Langloch (126a, 126b, 132a) geführt ist.

6. Transportradanordnung nach Anspruch 5, **dadurch gekennzeichnet, dass** der scheibenförmige Radkörper (102) zwei konzentrisch angeordnete Scheibenelemente (126, 132) umfasst, welche bezüglich ihrer gemeinsamen Mittelachse (R1) gegeneinander verdrehbar sind, beispielweise indem die Antriebsvorrichtung (106) jeweilige Antriebe, insbesondere Servomotoren, für beide Scheibenelemente (126, 132) umfasst.

7. Transportradanordnung nach Anspruch 6, **dadurch gekennzeichnet, dass** dem Anlageelement (116) und dem Saugnapfelement (118) jeweils ein Nocken (130a, 130b) zugeordnet ist, welche Nocken (130a, 130b) in separaten Langlöchern (126a, 126b) in einem der beiden Scheibenelement (126) geführt sind, wobei die Langlöcher (126a, 126b) derart ausgebildet sind, dass eine Verdrehung der beiden Scheibenelemente (126, 132) gegeneinander eine relative Verlagerung des Anlageelements (116) und des Saugnapfelements (118) in radialer Richtung bewirkt.

8. Transportradanordnung nach einem der vorhergehenden Ansprüche, **dadurch gekennzeichnet, dass** dem Grundkörper (104) wenigstens eine Schaltvorrichtung (124) zugeordnet ist, welche dazu betreibbar ist, bei einem vorbestimmten Relativwinkel zwischen dem Grundkörper (104) und dem Saugnapfelement (118) oder einem der mehreren Saugnapfelemente (118) das Liefern des Unterdrucks zu diesem zu unterbrechen.

9. Transportradanordnung nach einem der vorhergehenden Ansprüche, **dadurch gekennzeichnet, dass** die Verlagerungseinrichtung (122) dazu eingerichtet ist, eine radiale Verlagerung des Anlageelement (116) gegenüber dem Radkörper (102) um wenigstens 20 mm, vorzugsweise um wenigstens 45 mm zu ermöglichen.

10. Transportradanordnung nach einem der vorhergehenden Ansprüche, **dadurch gekennzeichnet, dass** der wenigstens eine Schaft (114) in abgedichteter Weise aus dem scheibenförmigen Radkörper (102) herausgeführt ist und gegebenenfalls weitere Dichtungselemente vorgesehen sind, so dass der Innenraum des Radkörpers (102) gegenüber der Umgebung abgedichtet ist.

11. Transportradanordnung nach einem der vorhergehenden Ansprüche, **dadurch gekennzeichnet, dass** sie ferner eine Höheneinstellungsvorrichtung umfasst (14), welche dazu eingerichtet ist, den Radkörper (102) in Richtung seiner Mittelachse (R1) zu verlagern.

12. Schleusenanordnung für zylindrische Körper, insbesondere Flaschen und/oder Ampullen, umfassend:
- wenigstens eine erste und eine zweite Transportradanordnung (100, 200) nach einem der vorhergehenden Ansprüche, welche derart angeordnet sind, dass die zylindrischen Körper (Z1-Z4) an einem Übergabepunkt (P) von der ersten Transportradanordnung (100) auf die zweite Transportradanordnung (200) übergebbar sind;
- wenigstens eine Eingabevorrichtung (20), welche dazu vorgesehen ist, die zylindrischen Körper (Z1-Z4) an einem Eingabepunkt (22) an die erste Transportradanordnung (100) zu übergeben;
- wenigstens eine erste (30) und eine zweite (40) Ausgabevorrichtung, welche jeweils dazu eingerichtet sind, die zylindrischen Körper (Z1-Z4) an einem Ausgabepunkt (34) von der ersten oder zweiten (44) Transportradanordnung zu übernehmen und abzutransportieren;
wobei die Steuereinheiten der ersten und zweiten Transportradanordnung (100, 200) miteinander betriebsmäßig gekoppelt oder durch eine einzelne gemeinsame Steuereinheit gebildet sind,
wobei die Schleusenanordnung wahlweise derart betreibbar ist, dass die zylindrischen Körper (Z1-Z4) von der ersten (30) oder der zweiten (40) Ausgabevorrichtung übernommen werden.

## Claims

1. Transport wheel arrangement for handling cylindrical bodies (Z1-Z4), in particular bottles and/or ampoules, comprising:
- a base body (104);
- a negative pressure source which is intended to provide a negative pressure for holding the cylindrical bodies (Z1-Z4);
- a disc-shaped wheel body (102) which is mounted so as to be rotatable about its central axis (R1) on the base body (104) and which has at least one aperture (102b) in its peripheral edge (102a);
- a drive device (106) which is designed to set the wheel body (102) in rotary motion;
- at least one receiving assembly (112) for holding a cylindrical body (Z1-Z4), comprising:
∘ a shaft (114) which extends radially outwards through the aperture (102b) or one of the apertures (102b) in the peripheral edge (102a) and which receives a line (120) for conducting the negative pressure;
∘ a contact element (116) provided radially outwardly on the shaft (114) and designed to represent a contact surface for a held cylindrical body (Z1-Z4); and
∘ a suction cup member (118) which is connected to the line (120) for guiding the negative pressure and is designed to hold a cylindrical body (Z1-Z4) by means of this negative pressure; and
- a control unit which is designed to control the operation of the drive device (106) and, if necessary, the negative pressure source;
wherein the transport wheel arrangement further comprises a displacement apparatus (122) which is designed to radially displace the contact element (116) and the suction cup element (118) of the receiving assembly (112) or at least one of the plurality of receiving assemblies (112) in a coordinated manner with respect to the wheel body (102), **characterised in that** the displacement apparatus (122) is designed to also displace the at least one contact element (116) and the at least one suction cup element (118) relative to one another during a radial displacement with respect to the wheel body (102), and **in that** the shaft (114) comprises two shaft elements (116d, 118a) arranged concentrically and slidable relative to one another in the axial direction of the wheel body (102), of which one (116d) carries the contact element (116) and the other (118a) carries the suction cup element (118).

2. Transport wheel arrangement according to claim 1, **characterised in that** a plurality of receiving assemblies (112) are provided and the displacement device (122) is designed to synchronously shift the contact elements (116) and suction cup elements (118) of several, in particular all, receiving assemblies (112).

3. Transport wheel arrangement according to any of the preceding claims, **characterised in that** the at least one contact element (116) comprises two limbs (116a, 116b) which extend radially obliquely outwards from the shaft (114) with respect to it.

4. Transport wheel arrangement according to claim 3, **characterised in that** the suction cup element (118) is arranged in radial extension of the shaft (114) between the two limbs (116a, 116b) of the contact element (116).

5. Transport wheel assembly according to any of the preceding claims, **characterised in that** the at least one receiving assembly (112) comprises at least one cam (130a, 130b) which is guided in an elongated hole (126a, 126b, 132a) associated with the wheel body.

6. Transport wheel arrangement according to claim 5, **characterised in that** the disc-shaped wheel body (102) comprises two concentrically arranged disc elements (126, 132) which are rotatable relative to one another with respect to their common central axis (R1), for example by the drive device (106) comprising respective drives, in particular servomotors, for both disc elements (126, 132).

7. Transport wheel arrangement according to claim 6, **characterised in that** the contact element (116) and the suction cup element (118) are each assigned a cam (130a, 130b), which cams (130a, 130b) are guided in separate elongated holes (126a, 126b) in one of the two disc elements (126), wherein the elongated holes (126a, 126b) are formed such that twisting of the two disc elements (126, 132) relative to one another causes a relative displacement of the contact element (116) and the suction cup element (118) in the radial direction.

8. Transport wheel arrangement according to one of the preceding claims, **characterised in that** at least one switching device (124) is associated with the base body (104), which is operable to interrupt the supply of negative pressure thereto at a predetermined relative angle between the base body (104) and the suction cup element (118) or one of the plurality of suction cup elements (118).

9. Transport wheel arrangement according to one of the preceding claims, **characterised in that** the displacement apparatus (122) is designed to enable a radial displacement of the contact element (116) relative to the wheel body (102) by at least 20 mm, preferably by at least 45 mm.

10. Transport wheel arrangement according to one of the preceding claims, **characterised in that** the at least one shaft (114) is guided out of the disc-shaped wheel body (102) in a sealed manner and, if necessary, further sealing elements are provided so that the interior of the wheel body (102) is sealed against the environment.

11. Transport wheel arrangement according to any of the preceding claims, **characterised in that** it further comprises a height adjustment device (14) which is designed to displace the wheel body (102) in the direction of its central axis (R1).

12. Lock arrangement for cylindrical bodies, in particular bottles and/or ampoules, comprising:
- at least a first and a second transport wheel arrangement (100, 200) according to one of the preceding claims, which are arranged such that the cylindrical bodies (Z1-Z4) can be transferred at a transfer point (P) from the first transport wheel arrangement (100) to the second transport wheel arrangement (200);
- at least one input device (20) which is intended to transfer the cylindrical bodies (Z1-Z4) at an input point (22) to the first transport wheel arrangement (100);
- at least one first (30) and one second (40) output device, each designed to receive and transport the cylindrical bodies (Z1-Z4) at an output point (34) from the first or second (44) transport wheel assembly;
wherein the control units of the first and second transport wheel arrangements (100, 200) are operatively coupled together or are formed by a single common control unit, wherein the lock arrangement is selectively operable such that the cylindrical bodies (Z1-Z4) are received by the first (30) or the second (40) output device.

## Revendications

1. Agencement de roue de transport pour la manipulation de corps cylindriques (Z1-Z4), en particulier de bouteilles et/ou d'ampoules, comprenant :
- un corps de base (104) ;
- une source de dépression, qui est prévue pour fournir une dépression pour maintenir les corps cylindriques (Z1-Z4) ;
- un corps de roue (102) en forme de disque, qui est monté sur le corps de base (104) de manière à pouvoir tourner autour de son axe central (R1), et qui présente au moins un ajour (102b) dans son bord périphérique (102a) ;
- un dispositif d'entraînement (106) qui est conçu pour entraîner le corps de roue (102) dans un mouvement de rotation ;
- au moins un agencement de réception (112) destiné à maintenir un corps cylindrique (Z1-Z4), comprenant :
∘ une tige (114) qui s'étend radialement vers l'extérieur à travers l'ajour (102b) ou l'un des ajours (102b) dans le bord périphérique (102a) et qui reçoit un conduit (120) pour guider la dépression ;
∘ un élément d'appui (116) prévu radialement à l'extérieur de la tige (114) et adapté pour constituer une surface d'appui pour un corps cylindrique maintenu (Z1-Z4); et
∘ un élément de ventouse (118) qui est relié au conduit (120) pour guider la dépression et qui est adapté pour maintenir un corps cylindrique (Z1-Z4) au moyen de cette dépression ; et
- une unité de commande qui est conçue pour commander le fonctionnement du dispositif d'entraînement (106) et, le cas échéant, de la source de dépression ;
dans lequel l'agencement de roue de transport comprend en outre un dispositif de déplacement (122) adapté pour déplacer l'élément de butée (116) et l'élément de ventouse (118) de l'agencement de réception (112) ou d'au moins un de la pluralité d'agencements de réception (112) de manière coordonnée radialement par rapport au corps de roue (102), **caractérisé en ce que** le dispositif de déplacement (122) est adapté pour déplacer ledit au moins un élément d'appui (116) et ledit au moins un élément de ventouse (118) également l'un par rapport à l'autre lors d'un déplacement radial par rapport au corps de roue (102), et **en ce que** la tige (114) comprend deux éléments de tige (116d, 118a) disposés de manière concentrique et pouvant être déplacés l'un par rapport à l'autre dans la direction axiale du corps de roue (102), dont l'un (116d) porte l'élément d'appui (116) et l'autre (118a) porte l'élément de ventouse (118).

2. Agencement de roue de transport selon la revendication 1, **caractérisé en ce que** plusieurs agencements de réception (112) sont prévus et **en ce que** le dispositif de déplacement (122) est agencé pour déplacer de manière synchrone les éléments d'appui (116) et les éléments de ventouse (118) de plusieurs agencements de réception (112), notamment de tous les agencements de réception.

3. Agencement de roue de transport selon l'une des revendications précédentes, **caractérisé en ce que** ledit au moins un élément d'appui (116) comprend deux branches (116a, 116b) qui s'étendent de manière oblique radialement vers l'extérieur de la tige (114) par rapport à celle-ci.

4. Agencement de roue de transport selon la revendication 3, **caractérisé en ce que** l'élément de ventouse (118) est disposé dans le prolongement radial de la tige (114) entre les deux branches (116a, 116b) de l'élément d'appui (116).

5. Agencement de roue de transport selon l'une des revendications précédentes, **caractérisé en ce que** ledit au moins un agencement de réception (112) comprend au moins une came (130a, 130b) guidée dans un trou oblong (126a, 126b, 132a) associée au corps de roue.

6. Agencement de roue de transport selon la revendication 5, **caractérisé en ce que** le corps de roue en forme de disque (102) comprend deux éléments de disque (126, 132) disposés de manière concentrique, qui peuvent tourner l'un par rapport à l'autre par rapport à leur axe central commun (R1), par exemple **en ce que** le dispositif d'entraînement (106) comprend des entraînements respectifs, en particulier des servomoteurs, pour les deux éléments de disque (126, 132).

7. Agencement de roue de transport selon la revendication 6, **caractérisé en ce qu'**une came (130a, 130b) est respectivement associée à l'élément d'appui (116) et à l'élément de ventouse (118), lesquelles cames (130a, 130b) sont guidées dans des trous oblongs séparés (126a, 126b) dans l'un des deux éléments de disque (126), dans lequel les trous oblongs (126a, 126b) sont conçus de telle sorte qu'une rotation des deux éléments de disque (126, 132) l'un par rapport à l'autre provoque un déplacement relatif de l'élément d'appui (116) et de l'élément de ventouse (118) dans la direction radiale.

8. Agencement de roue de transport selon l'une des revendications précédentes, **caractérisé en ce que** le corps de base (104) est associé à au moins un dispositif de commutation (124) qui peut être mis en oeuvre pour interrompre la fourniture de la dépression à l'élément de ventouse (118) à un angle relatif prédéterminé entre le corps de base (104) et l'élément de ventouse (118) ou un des éléments de ventouse (118).

9. Agencement de roue de transport selon l'une des revendications précédentes, **caractérisé en ce que** le dispositif de déplacement (122) est agencé pour permettre un déplacement radial de l'élément d'appui (116) par rapport au corps de roue (102) d'au moins 20 mm, de préférence d'au moins 45 mm.

10. Agencement de roue de transport selon l'une des revendications précédentes, **caractérisé en ce que** ledit au moins une tige (114) est sortie de manière étanche du corps de roue en forme de disque (102) et **en ce que** d'autres éléments d'étanchéité sont éventuellement prévus, de sorte que l'intérieur du corps de roue (102) est étanche par rapport à l'environnement.

11. Agencement de roue de transport selon l'une des revendications précédentes, **caractérisé en ce qu'**il comprend en outre un dispositif de réglage en hauteur (14) agencé pour déplacer le corps de roue (102) en direction de son axe central (R1).

12. Agencement de sas pour corps cylindriques, notamment des bouteilles et/ou des ampoules, comprenant :
- au moins un premier et un deuxième agencement de roue de transport (100, 200) selon l'une des revendications précédentes, qui sont disposés de telle sorte que les corps cylindriques (Z1-Z4) peuvent être transférés du premier agencement de roue de transport (100) au deuxième agencement de roue de transport (200) en un point de transfert (P) ;
- au moins un dispositif d'entrée (20), qui est prévu pour transférer les corps cylindriques (Z1-Z4) au premier agencement de roue de transport (100) en un point d'entrée (22) ;
- au moins un premier (30) et un deuxième (40) dispositifs de sortie, qui sont respectivement conçus pour prendre en charge et évacuer les corps cylindriques (Z1-Z4) en un point de sortie (34) du premier ou du deuxième (44) agencement de roue de transport ;
dans lequel les unités de commande des premier et deuxième agencements de roue de transport (100, 200) sont couplées fonctionnellement entre elles ou formées par une seule unité de commande commune,
dans lequel l'agencement de sas peut être actionné au choix de telle sorte que les corps cylindriques (Z1-Z4) soient pris en charge par le premier (30) ou le deuxième (40) dispositif de distribution.
